# EUROPÄISCHE PATENTSCHRIFT

(11) **EP 0 861 773 B1**
(45) Veröffentlichungstag und Bekanntmachung des Hinweises auf die Patenterteilung: **22.03.2000**
(21) Anmeldenummer: 96935628.6
(22) Anmeldetag: 07.10.1996
(51) Int. Cl.: B64B 1/12, B64B 1/68, B60V 3/08, B64C 29/00

(54) **HYBRID-STARRLUFTSCHIFFE VON FILIMONOV**
FILIMONOV HYBRID DIRIGIBLE CRAFT
DIRIGEABLE HYBRIDE DE FILIMONOV

(30) Priorität: 31.10.1995 RU 95117921
(43) Veröffentlichungstag der Anmeldung: 02.09.1998
(73) Patentinhaber: Filimonov, Alexandr Iosifovich, Tjumen, 625010 (RU)
(72) Erfinder: Filimonov, Alexandr Iosifovich, Tjumen, 625010 (RU)
(74) Vertreter: Springstubbe, Wolf, Dipl.-Ing.
(86) Internationale Anmeldenummer: RU9600284
(87) Internationale Veröffentlichungsnummer: WO9716342

(56) Entgegenhaltungen:
- EP-A- 0 667 283
- WO-A-93/11986
- GB-A- 990 828
- GB-A- 1 164 994
- GB-A- 1 263 908
- GB-A- 1 530 613
- GB-A- 2 107 658
- RU-C- 2 012 512
- RU-C- 2 028 965
- US-A- 1 396 874
- US-A- 4 436 312
- US-A- 5 035 377

## Beschreibung

### Gebiet der Technik

Die Erfindung bezieht sich auf das Gebiet der Luftfahrt, und zwar auf Luftkissen-Luftfahrzeuge, die auf Flugplätzen beliebiger Art und sogar bei Fehlen eines solchen starten und landen. Genauer gesagt, sie bezieht sich auf hybride lenkbare Luftschiffe.

Das hybride lenkbare Luftschiff gehört zu den Luftfahrzeugen mit kombiniertem Flugprinzip und kann zum Heben und Transportieren überschwerer und grosse Abmessungen aufweisender Frachten benutzt werden.

### Stand der Technik

Es sind lenkbare Luftschiffe bekannt (siehe Magazin "Technika molodezhi", 1987, Nr.2; FR-Patent Nr. 2366989, B64B 1/06, 1976), die einen diskusförmigen Rumpf mit einem zentralen Tunnel, innerhalb dessen ein leicht zu umströmender, mit den Wänden des Tunnels mittels radialer Zwischenwände aerodynamischen Profils befestigter Körper mit einem Rotor an seinem oberen Teil angeordnet ist, Pilot-Passagier- und Frachtkabinen und Marschantriebsanlagen aufweisen.

Bei den genannten lenkbaren Luftschiffen wird ein Fehlen ausreichender Stabilität und Steuerbarkeit sowohl im Flug als auch auf dem Boden beobachtet, was eine Beeinträchtigung der Betriebseigenschaften des lenkbaren Luftschiffs mit sich bringt.

Ein weiteres bekanntes lenkbares Luftschiff (siehe RU-Anmeldung Nr. 92-012238/11 (057581), B64B 1/06, 1992) enthält einen diskusförmigen Rumpf mit einem zentralen Tunnel, innerhalb dessen ein leicht zu umströmender, mit den Wänden mittels radialer Zwischenwände aerodynamischen Profils befestigter Körper mit einem Rotor an seinem oberen Teil angeordnet ist, Pilot-Passagier- und Frachtkabinen und eine Antriebsanlage mit Schub-Propellern, Luftkissen-Landeeinrichtungen in Form eines aufblasbaren torusartigen Ballons und von Rad-Kufe-Stützen, die an den unteren Flächen angebracht sind, drehbare Klappen, die am Eingang in den zentralen Tunnel angeordnet sind, Steuer- und Stabilisierungsorgane, die am Ausgang aus dem zentralen Tunnel angeordnet sind, Flügeltragwerke und ein Heckleitwerk mit einem Stabilisator und zwei oder mehreren Leitflächen, die am hinteren Teil des Rumpfes angeordnet sind, Strahlklappen, die an den hinteren Kanten der Flügeltragwerke und des Rumpfs angeordnet sind, Strahlruder, die am Stabilisator und an den Flügeltragwerken angeordnet sind.

Ein Nachteil dieses lenkbaren Luftschiffs ist das Fehlen einer ausreichenden Stabilität (Kippsicherheit) und Steuerbarkeit sowohl beim Starten als auch beim Landen insbesondere auf dem Wasser und auf schwachtragenden Flächen - Schnee, Sumpf usw. -, was eine Beeinträchtigung der Betriebseigenschaften des lenkbaren Luftschiffs mit sich bringt.

### Offenbarung der Erfindung

Die Aufgabe der Erfindung besteht in der Entwicklung eines lenkbaren Luftschiffs mit verbesserten Betriebseigenschaften, die einen Start und eine Landung auf dem Wasser und auf schwachtragenden Oberflächen erlauben.

Zur Lösung dieser Aufgabe ist ein lenkbares Luftschiff, *enthaltend einen diskusförmigen Rumpf mit einem zentralen Tunnel,* innerhalb dessen ein leicht zu umströmender, an den Wänden des Tunnels mittels radialer Zwischenwände aerodynamischen Profils befestigter Körper mit einem Rotor an seinem oberen Teil angeordnet ist, Pilot-Passagier- und Frachtkabinen, eine Antriebsanlage mit Schub-Propellern, Luftkissen-Landeeinrichtungen in Form eines aufblasbaren torusartigen Ballons und von Rad-Kufe-Stützen, die an den unteren Flächen angebracht sind, schwenkbare Klappen, die am Eingang in den zentralen Tunnel angeordnet sind, Steuer- und Stabilisierungsorgane, die am Ausgang aus dem zentralen Tunnel angeordnet sind, Flügeltragwerke und ein Heckleitwerk mit einem Stabilisator und zwei oder mehreren Leitflächen, die am hinteren Teil des Rumpfes angeordnet sind, Strahlklappen, die an den hinteren Kanten der Flügeltragwerke und des Rumpfs angeordnet sind, Strahlruder, die am Stabilisator und an den Flügeltragwerken angeordnet sind,
mit am Stabilisator angeordneten Höhenquerrudern und einer flexiblen, unten am vorderen Teil des torusartigen Ballons angeordneten Schutzumrandung versehen.
Außerdem kann das lenkbare Luftschiff zusätzlich mit Organen zum Starten vom Wasser aus in Form einer Gleitfläche unter der Pilot-Passagierkabine und eines Hydroflügels hinter dem Rumpf versehen sein; dabei stellt die flexible Schutzumrandung einen aus einem dichten Stoff ausgebildeten konusartigen Schirm mit Taschen dar, in denen in radialer Richtung zusätzlich elastische Panzerungen mit Rollen und Riemen mit an den Seitenwänden des torusartigen Ballons befestigten Enden angeordnet sind.

Eine solche Konstruktion erlaubt es, die Steuerbarkeit des vorgeschlagenen lenkbaren Luftschiffs zu erhöhen, weil die Höhenquerruder die Funktion eines Ailerons, d.h. eines Querruders, und eines Höhenruders erfüllen. Die Ausrüstung des lenkbaren Luftschiffs mit zusätzlichen Organen in Form einer Gleitfläche unter der Pilot-Passagierkabine ermöglicht eine Erhöhung der Stabilität (Kippsicherheit) bei einem Start vom Wasser und von anderen schwachtragenden Oberflächen aus, weil das erwähnte Gleitelement zu diesem Zeitpunkt eine geneigte Stellung von 3 bis 5 Grad einnimmt, bedingt durch die Entfaltung des torusartigen Ballons, auf den es sich mit dem hinteren Teil stützt. Bei der Bewegung des LF (weiter im Text Luftfahrzeug) erzeugt die Gleitfläche eine Tragkraft, drückt das Luftfahrzeug aus dem Wasser und senkt seinen Widerstand. Die Anordnung des Hydroflügels hinter dem Rumpf erzeugt bei einem Start vom Wasser aus eine zusätzliche hydraulische Tragkraft und gewährleistet eine Längssteuerung mittels Verkleinerung oder Vergrößerung seines Einstellwinkels. Die Ausrüstung des lenkbaren Luftschiffes mit einer flexiblen Schutzumrandung, eines sogenannten Schirms, erlaubt es, im aufgeblasenen Zustand des torusartigen Ballons das Überströmen der Luft nach vorn und nach den Seiten zu begrenzen und leitet die Luft aus dem Luftkissen zurück, wobei das Luftfahrzeug bei seiner Bewegung nahe der Erde stabilisiert und ein zusätzlicher Marschvortrieb erzeugt wird.

Die Gesamtheit von wesentlichen Mermalen, die das Wesen der Erfindung kennzeichnen, kann vielfach bei der Herstellung von Luftfahrzeugen mit gemischtem Flugprinzip unter Erhalt eines technischen Ergebnisses Anwendung finden, das in der Erhöhung der Stabilität (Kippsicherheit) und der Steuerbarkeit beim Start und bei der Landung auf dem Wasser und auf schwachtragenden Flächen besteht, was die Schlußfolgerung erlaubt, daß die Erfindung dem Kriterium "gewerbliche Verwertbarkeit" entspricht.

### Kurze Beschreibung der Zeichnungen

Im folgenden wird die Erfindung anhand einer Beschreibung eines konkreten Ausführungsbeispiels und von Zeichnungen erläutert, in denen dargestellt sind:

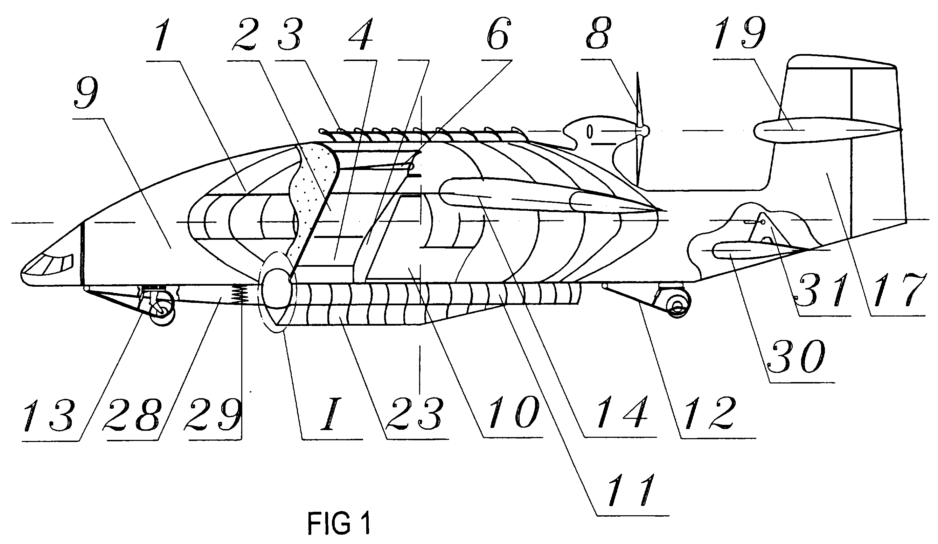

in Fig. 1 - schematisch ein hybrides lenkbares Luftschiff;

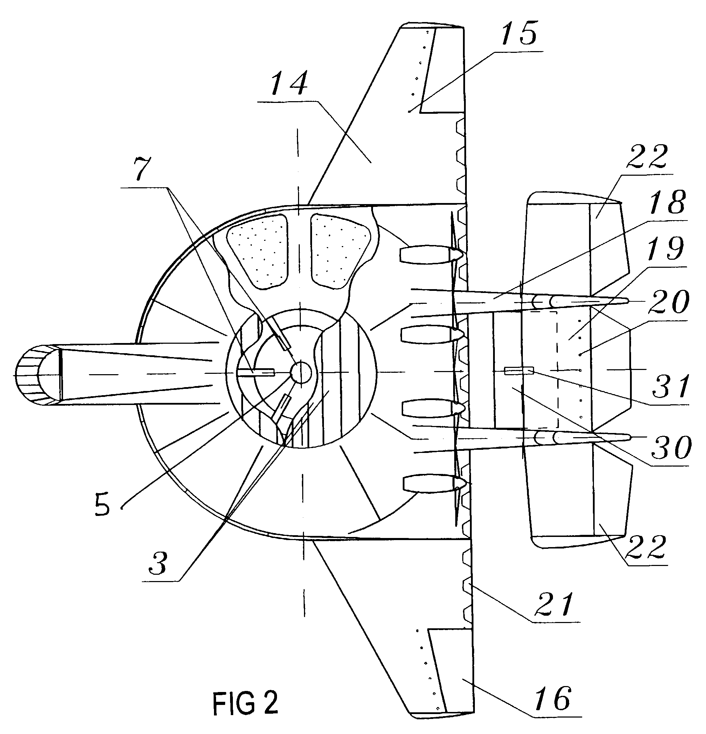

in Fig. 2 - ein lenkbares Luftschiff in der Aufsicht;

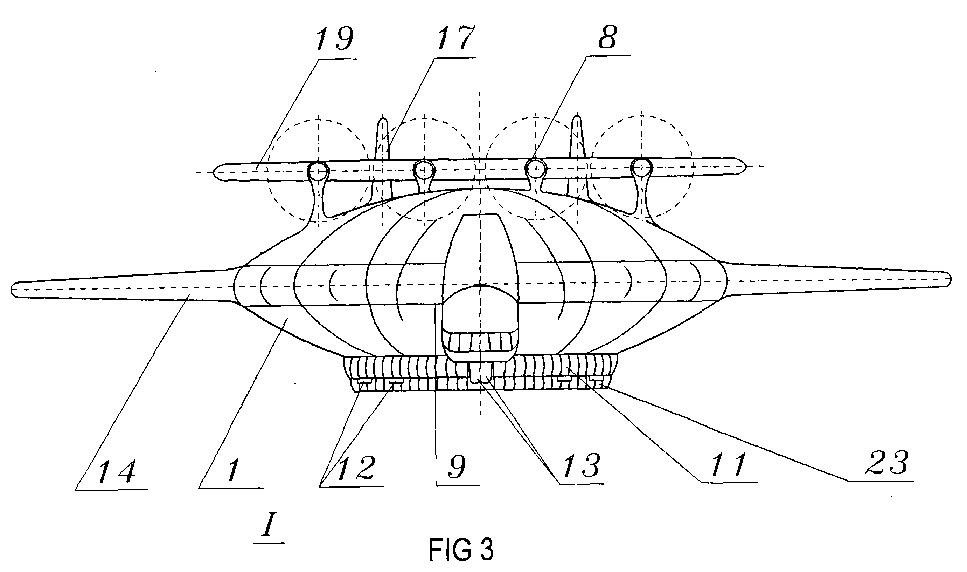

in Fig. 3 - eine Vorderansicht;

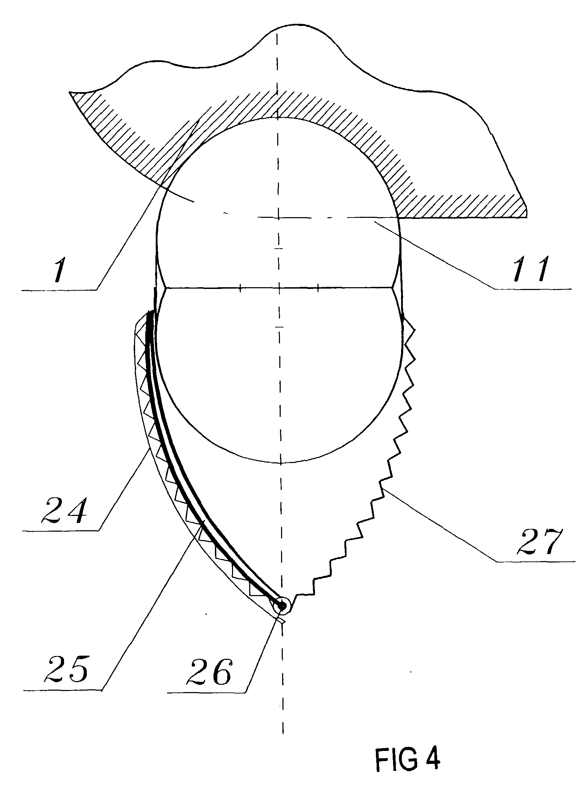

in Fig. 4 - eine flexible Schutzumrandung.

### Beste Ausführungsvariante der Erfindung

Das hybride lenkbare Luftschiff enthält einen diskusförmigen Rumpf 1 mit einem zentralen Tunnel 2, in welchem schwenkbare Klappen 3 am Eingang angeordnet sind, Steuer- und Stabilisierungsorgane 4, die am Ausgang aus dem zentralen Tunnel angeordnet sind, und darinnen einen leicht zu umströmenden, an den Wänden des Tunnels mittels radialer Zwischenwände 7 aerodynamischen Profils befestigten Körper 5 mit einem Rotor 6 an seinem oberen Teil, eine Antriebsanlage mit Schub-Propellern 8, eine Pilot-Passagierkabine 9 und eine Frachtkabine 10, Luftkissen-Landeeinrichtungen in Form eines aufblasbaren torusartigen Ballons 11 und von Rad-Kufe-Stützen 12 und 13, die an den unteren Flächen angebracht sind, Flügeltragwerke 14 mit an deren Enden angeordneten Strahl-Querrudern 15 und Querrudern 16, ein Heckleitwerk mit zwei Leitflächen 17, die am hinteren Teil des Rumpfes an Heckträgern 18 angeordnet sind, und Stabilisatoren 19 mit einem Strahllängsruder 20, Strahlklappen 21, die an den hinteren Kanten der Flügeltragwerke und des Rumpfs angeordnet sind. An den Seitensektionen des Stabilisators sind Höhenquerruder 22 angeordnet, die gleichzeitig die Funktionen eines Ailerons, d.h. eines Querruders, und eines Höhenruders erfüllen. Vor und unterhalb des torusartigen Ballons 11 ist eine flexible Schutzumrandung angeordnet. Die flexible Schutzumrandung ist als konusartiger Schirm 24 aus einem dichten Stoff ausgebildet, an dessem Durchmesser in radialer Richtung in Taschen elastische Panzerungen 25 mit Rollen 26 am Ende angeordnet sind. Über die Rolle ist ein Gummiriemen 27 geführt, der mit seinen Enden an den Seitenwänden des torusartigen Ballons 11 befestigt ist. Der Schirm ist an dem vorderen Ballonsektor, 180 Grad und mehr, unter Verringerung seiner Höhe zum hinteren Sektor hin angeordnet. Unterhalb der Pilot-Passagierkabine 9 ist eine Gleitfläche 28 angebracht, die mit dem vorderen Teil an der Kabine unten gelenkig befestigt ist und sich mit dem hinteren Teil an den torusartigen Ballon 11 im aufgeblasenem Zustand unter gleichzeitigem Anpressen der Zugfeder 29 stützt. Zwischen den Heckträgern 18 und unter der hinteren Kante des Rumpfes 1 ist ein Hydroflügel 30 angeordnet, der gelenkig an den Heckträgern 18 befestigt und mit einem Hebel 31 versehen ist, über welchen mittels einer (in der Zeichnung nicht gezeigten) Steuerleitung der Hydroflügel von der Pilot-Passagierkabine aus gesteuert wird.

Die Höhenquerruder 22 arbeiten wie folgt:

Bei einem Start oder einer Landung, insbesondere auf schwachtragenden Oberflächen, entsteht ein Kippmoment wegen des Ausblasens von Luftstrahlen aus dem Innenraum des Luftkissens. Die Strahl-Querruder 15 und Querruder 16 sind zum Löschen dieses Momentes nicht ausreichend. Um diesem Moment zu begegnen, kippen die seitlichen Sektionen der Höhenruder gleichzeitig nach oben und unten wie die Querruder. Nachdem sie sich im Abstrom der Schub-Propeller 8 befinden, bilden sie das notwendige Quermoment (zum Löschen des Kippmomentes).

Die flexible Schutzumrandung 23 begrenzt im aufgeblasenen Zustand des torusartigen Ballons das Überströmen der Luft nach vorn und nach den Seiten und leitet die Luft aus dem Luftkissen zurück, wodurch das Luftfahrzeug bei seiner Bewegung in der Nähe der Erde stabil auf Kurs gehalten wird. Die notwendige Steifigkeit und Form verleihen dem Schirm die Panzerungen 25 und Gummiriemen 27. Bei einem Zusammenfalten des torusartigen Ballons (bei Rücknahme des Drucks darin) wird der Schirm automatisch unter der Wirkung der Gummiriemen 27 an den Torus gepresst, der seinerseits mit eigenen (in der Zeichnung nicht gezeigten) Gummiriemen gepresst wird.

Bei einem Start vom Wasser und von anderen schwachtragenden Flächen aus nimmt die Gleitfläche 28 eine geneigte Stellung (3 - 5 Grad) ein, bedingt durch die Entfaltung des torusartigen Ballons, auf den sie sich mit dem hinteren Teil abstützt. Bei der Bewegung des Luftfahrzeuges erzeugt die Gleitfläche eine Tragkraft, drückt das Luftfahrzeug aus dem Wasser und verringert seinen Widerstand. Nach dem Start zieht sich die Gleitfläche beim Zusammenfalten des torusartigen Ballons durch die Feder 29 automatisch an den unteren Teil der Pilot-Passagierkabine heran, ohne im Flug einen zusätzlichen aerodynamischen Widerstand zu bilden. Der Hydroflügel 30 erzeugt bei einem Start vom Wasser aus eine zusätzliche hydraulische Tragkraft, und mit deren Hilfe wird eine Längssteuerung mittels Verminderung oder Vergrößerung seines Einstellwinkels gewährleistet. Der Winkel ändert sich durch die Einwirkung einer Steuerkraft auf den Hebel 31. Nach dem Start und im Flug kann der Hydroflügel Funktionen einer Einrichtung zur aerodynamischen Längstrimmung des Luftfahrzeuges erfüllen.

### Gewerbliche Verwertbarkeit

Das vorgeschlagene hybride lenkbare Luftschiff ist stabil und steuerbar sowohl im Flug als auch bei einem Start und einer Landung auf der Erde oder auf schwachtragenden Böden auf Grund einer Erhöhung des Steuerbarkeit des lenkbaren Luftschiffes, auf Grund einer Erfüllung von Querruder-Funktionen durch die Höhenquerruder. Die Gleitfläche unter der Pilot-Passagierkabine erhöht die Stabilität (Kippsicherheit) beim Start von schwachtragenden Flächen und vom Wasser.

Die durchgeführten rechnerischen und experimentellen Tests zeigen ein hohes Niveau der flugtechnischen Daten eines gemäß der vorliegenden Erfindung ausgebildeten hybriden lenkbaren Luftschiffs.

Unten ist eine Tabelle angegeben, die technische Daten des hybriden lenkbaren Luftschiffs enthält.

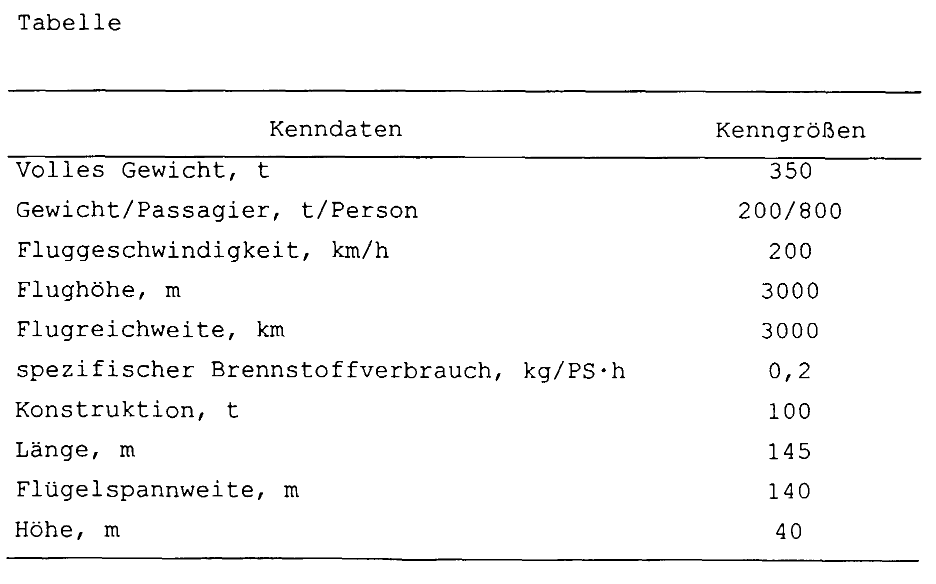

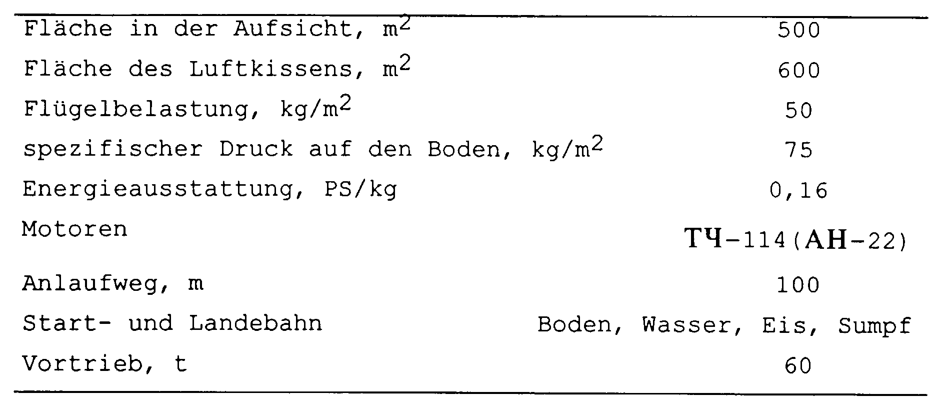

## Patentansprüche

1. Lenkbares Luftschiff, enthaltend einen diskusförmigen Rumpf (1) mit einem zentralen Tunnel (2), innerhalb dessen ein leicht zu umströmender, mit den Wänden mittels radialer Zwischenwände (7) aerodynamischen Profils befestigter Körper (5) mit einem Rotor (6) an seinem oberen Teil angeordnet ist, Pilot-Passagier- (9) und Frachtkabinen (10), eine Antriebsanlage mit Schub-Propellern (8), Luftkissen-Landeeinrichtungen in Form eines aufblasbaren torusartigen Ballons (11) und von Rad-Kufe-Stützen (12 und 13), die an den unteren Flächen angebracht sind, schwenkbare Klappen (3), die am Eingang in den zentralen Tunnel (2) angeordnet sind, Steuer- und Stabilisierungsorgane (4), die am Ausgang aus dem zentralen Tunnel angeordnet sind, Flügeltragwerke (14) und ein Heckleitwerk mit einem Stabilisator (19) und zwei oder mehreren Leitflächen (17), die am hinteren Teil des Rumpfes angeordnet sind, Strahlklappen (21), die an den hinteren Kanten der Flügeltragwerke und des Rumpfs angeordnet sind, Strahlruder (15), die am Stabilisator und an den Flügeltragwerken angeordnet sind,
**dadurch gekennzeichnet,**
daß es zusätzlich mit am Stabilisator angeordneten Höhenquerrudern (22) und einer flexiblen, unten am vorderen Teil des torusartigen Ballons (11) angeordneten Schutzumrandung (23) versehen ist.

2. Lenkbares Luftschiff nach Anspruch 1,
**dadurch gekennzeichnet,**
daß es zusätzlich mit Organen zum Starten vom Wasser aus in Form einer Gleitfläche (28) unter der Kabine (9) versehen ist.

3. Lenkbares Luftschiff nach Anspruch 2,
**dadurch gekennzeichnet,**
daß Organe zum Starten vom Wasser aus in Form einer Gleitfläche unter der Pilot-Passagier-Kabine (9) und eines Hydroflügels (30) hinter dem Rumpf angeordnet sind.

4. Lenkbares Luftschiff nach Anspruch 1,
**dadurch gekennzeichnet,**
daß die flexible Schutzumrandung als konusartiger Schirm (24) ausgebildet ist.

5. Lenkbares Luftschiff nach Anspruch 4,
**dadurch gekennzeichnet,**
daß der konusartige Schirm der Schutzumrandung aus einem dichten Stoff gebildet ist.

6. Lenkbares Luftschiff nach Anspruch 4,
**dadurch gekennzeichnet,**
daß der Schirm mit Taschen ausgebildet ist, in denen in radialer Richtung zusätzlich elastische Panzerungen (25) mit Rollen (26) und Riemen (27) mit befestigten Enden angeordnet sind.

7. Lenkbares Luftschiff nach Anspruch 6,
**dadurch gekennzeichnet,**
daß die Riemen aus einem Gummistoff sind.

8. Lenkbares Luftschiff nach Anspruch 6,
**dadurch gekennzeichnet,**
daß die Riemen aus einem gummierten Stoff sind.

9. Lenkbares Luftschiff nach Anspruch 6,
**dadurch gekennzeichnet,**
daß die Riemenenden an den Seitenwänden des torusartigen Ballons (11) befestigt sind.

## Claims

1. Controllable airship, containing a fuselage (1) in the shape of a discus and having a central tunnel (2) within which a body (5) is arranged, around which body (5) flow passes easily and which body (5) is attached to the walls by means of radial intermediate walls (7) of aerodynamic profile and has a rotor (6) on its upper part, containing pilot-passenger cabins (9) and freight cabins (10), a propulsion system with pusher propellers (8), air-cushion landing devices in the form of an inflatable, toroidal balloon (11), and wheel-skid supports (12 and 13) which are fitted to the lower surfaces, pivoting flaps (3) which are arranged at the entry to the central tunnel (2), control and stabilization members (4) which are arranged at the exit from the central tunnel, main planes (14) and tail surfaces with a stabilizer (19) and two or more fins (17) which are arranged on the rear part of the fuselage, jet flaps (21) which are arranged on the rear edges of the main plane and of the fuselage, reaction controls (15) which are arranged on the stabilizer and on the main planes,
characterized
in that said airship is additionally provided with elevons (22) arranged on the stabilizer, and a flexible protective surround (23) which is arranged at the bottom on the front part of the toroidal balloon (11).

2. Controllable airship according to Claim 1,
characterized
in that said airship is additionally provided with members for taking off from water, in the form of a sliding surface (28) under the cabin (9).

3. Controllable airship according to Claim 2,
characterized
in that members for taking off from water are arranged in the form of a sliding surface under the pilot-passenger cabin (9), and a hydroplane (30) behind the fuselage.

4. Controllable airship according to Claim 1,
characterized
in that the flexible protective surround is in the form of a conical screen (24).

5. Controllable airship according to Claim 4,
characterized
in that the conical screen of the protective surround is formed from a dense material.

6. Controllable airship according to Claim 4,
characterized
in that the screen is designed with pockets in which armouring (25) is arranged, which is also elastic in the radial direction and has rollers (26) and belts (27) with secured ends.

7. Controllable airship according to Claim 6,
characterized
in that the belts are made of a rubber material.

8. Controllable airship according to Claim 6,
characterized
in that the belts are made of a rubberized material.

9. Controllable airship according to Claim 6,
characterized
in that the belt ends are attached to the side walls of the toroidal balloon (11).

## Revendications

1. Aéronef à maniabilité de direction, comprenant un fuselage (1) en forme de disque comportant un tunnel central (2), à l'intérieur duquel est disposé, avec un rotor (6) à sa partie supérieure, un corps (5) à enveloppement aisé par un écoulement et fixé aux parois au moyen de parois intermédiaires radiales (7) à profil aérodynamique, des cabines de pilote-passagers (9) et de fret (10), une installation motrice à propulseurs de poussée (8), des dispositifs d'atterrissage à coussin d'air sous forme d'un ballon en forme de tore (11) gonflable et d'appuis à roue-patin (12 et 13), qui sont montés sur les surfaces inférieures, des volets basculables (3), qui sont disposés à l'entrée dans le tunnel central (2), une voilure en forme d'ailes (14) et un empennage arrière comportant un stabilisateur (19) et deux ou plusieurs gouvernes de direction (17), qui sont disposées à l'extrémité arrière du fuselage, des volets à réaction (21), qui sont disposés sur les bords arrière de la voilure en forme d'ailes et du fuselage, des ailerons à réaction (15), qui sont disposés sur le stabilisateur et sur la voilure en forme d'ailes,
caractérisé en ce qu'il est en outre pourvu de gouvernes de profondeur (22) disposés sur le stabilisateur et d'un entourage de protection (23) flexible disposé en dessous à la partie avant du ballon en forme de tore (11).

2. Aéronef à maniabilité de direction suivant la revendication 1, caractérisé en ce qu'il est en outre pourvu d'organes pour le décollage hors de l'eau sous forme d'une surface de glissement (28) sous la cabine (9) .

3. Aéronef à maniabilité de direction suivant la revendication 2, caractérisé en ce que des organes pour le décollage hors de l'eau sous forme d'une surface de glissement sont disposés sous la cabine de pilote-passagers (9) et une surface portante hydraulique (30) derrière le fuselage.

4. Aéronef à maniabilité de direction suivant la revendication 1, caractérisé en ce que l'entourage de protection flexible est réalisé sous forme d'un écran (24) en forme de cône.

5. Aéronef à maniabilité de direction suivant la revendication 4, caractérisé en ce que l'écran en forme de cône de l'entourage de protection est formé d'une matière dense.

6. Aéronef à maniabilité de direction suivant la revendication 4, caractérisé en ce que l'écran est réalisé avec des poches dans lesquelles sont en outre disposés, suivant une direction radiale, des blindages élastiques (25) à galets (26) et courroies (27) à extrémités fixées.

7. Aéronef à maniabilité de direction suivant la revendication 6, caractérisé en ce les courroies sont en une matière du type caoutchouc.

8. Aéronef à maniabilité de direction suivant la revendication 6, caractérisé en ce que les courroies sont en une matière présentant un engommage.

9. Aéronef à maniabilité de direction suivant la revendication 6, caractérisé en ce que les extrémités de courroie sont fixées sur les parois latérales du ballon en forme de tore (11).
